# EUROPEAN PATENT APPLICATION

(11) **EP 1 732 014 A1**
(43) Date of publication of application: **13.12.2006**
(21) Application number: 05012313.2
(22) Date of filing: 08.06.2005
(51) Int. Cl.: G06F 17/30

(54) **Calculation of specifed matrices**

(71) Applicant: SAP AG, 69190 Walldorf (DE)
(72) Inventor: Kahn, Markus, Dr., 69120 Heidelberg (DE); Baumann, Marcus, 69207 Sandhausen (DE)
(74) Representative: Luderschmidt, Schüler & Partner

(57) **Abstract**

The present invention refers to a computer-implemented method, a computer system, and a computer program product for determining specified matrices, particularly associated with financial institutions and with financial affairs in banking practice, by forming a base matrix which is used to create the specified matrices for the purpose of improving the computing power of software and the software performance (run time), respectively, preferably in the case of mass data.

## Description

### FIELD OF THE INVENTION

The present invention generally relates to electronic data processing and in particular, to a computer implemented method, computer system and computer program products for determining specified matrices, particularly associated with financial institutions and with financial affairs in banking practise.

### BACKGROUND OF THE INVENTION

As international financial markets expand, global concerns over the soundness of banking practices are driving stringent new requirements for bank-level management, regulatory control, and market disclosure.

Prior art data processing systems in banking are provided with software tools, for example SAP proprietary software tool solutions in banking, e.g. the SAP solution for the new Basel Capital Accord (Basel II) that builds on the proven capabilities of the SAP for Banking solution portfolio, that enable to pursue said requirements.

The SAP solution for the new Basel Capital Accord (Basel II) represents a risk-sensitive framework that provides capabilities for calculating risk exposure and capital, for managing market risk, interest risk, or liquidity risk, and for calculating and managing all areas of credit risk, helping to facilitate the handling of mass data, particularly being of specific economic interest and associated with financial institutions and with financial affairs in banking practice.

In view of prior art software tool solutions for banking systems, there still remains the need to improve the software performance (runtime performance). According to the new Basel II capital record rating data must be analysed regularly in form of a portfolio and migration matrices.

The problem is to calculate the rating portfolio and migration matrices efficiently. Usually, the underlying mass data may not allow a simple computer based main memory processing since the large amount of data may exceed the memory limits of the computer. Therefore, it is an object of the present invention to provide a method reducing the processing time needed to calculate data necessary to assess the risks according to Basel II as mentioned above.

With regard thereto, it is an object of the present invention to provide a method guarantying the data and method integrity.

### SUMMARY OF THE INVENTION

The present invention meets the above-identified need by providing a method for determining specified matrices, particularly associated with financial institutions and with financial affairs and banking practice, that can be easily integrated into existing credit risk platforms as, for example, the above-mentioned SAP solution for Basel II.

It is another object for the present invention to provide a computer system and a computer program product for determining specified matrices and further a data carrier readable by a computer, the data carrier storing a plurality of instructions implemented by a computer program for causing the processing means of a computer system to execute the computer-implemented method.

A further object of the present invention is to provide a computer implemented method that can optionally perform an automated generic aggregation of data either in a linear or a parallel processing mode, thereby noticeably improving the computer power of software, as preferably in the case of mass data depending on the capacity utilization of a data processing system.

To achieve the foregoing objects, and in accordance with the purpose of the invention as embodied and broadly described herein, there is provided a computer-implemented method for determining specified matrices, particularly associated with financial institutions and financial affairs in banking practice, the method comprising the following steps:
Receiving mass data from a single database of a single data source or from different databases of different data sources associated with banking practice, said mass data including sets of rows and sets of columns, each row corresponding to a record, and the columns including fields of predetermined granularity characteristics and fields of predetermined key figures;
selecting predetermined granularity characteristics and predetermined key figures, and selecting predetermined aggregation operations to be carried out by the processing means of a data processing system;
reading input data from a single database of a single data source or from different databases of different data sources into the processing means of a data processing system;
processing the data packages in a process by identifying said customized granularity characteristics and key figures; and subsequently aggregating the records in each data package for key figures by using aggregation operations;
forming at least one base matrix comprising the aggregated records of said customized granularity characteristics and key figures by saving the results of each data package; and
using said base matrix to calculate said specified matrices.

In another aspect of the invention, the aggregation is computed on predetermined key figures using predetermined aggregation operations selected from a function pool and / or customer defined aggregation operations to be defined by input means using said predetermined aggregation operations.

In yet another aspect of the invention, the aggregation is computed on customer defined key figures to be defined by input means using said predetermined aggregation operations selected from a function pool and using said predetermined aggregation operations and / or said customer defined aggregation operations.

These and other features, objects and advantages of the preferred embodiments will become apparent when the detailed description of the preferred embodiments is read in conjunction with the drawings attached hereto.

### BRIEF DESCRIPTION OF DRAWINGS

- Fig. 1: illustrates a process flow for the calculation of various matrices according to the present invention and
- Fig. 2: illustrates a block diagram showing the application servers and data servers of a preferred embodiment of the present invention.

### DETAILED DESCRIPTION OF EXEMPLARY EMBODIMENTS

Reference will now be made in detail to the present invention, examples of which are illustrated in the accompanying drawings in which like reference numbers refer to corresponding elements.

The present invention does not only refer to a computer-implemented method for determining specified matrices, particularly associated with financial institutions and with financial affairs and banking practice, but also to a data processing system, a computer program product that can be stored on a computer readable data carrier, and a data carrier.

The data processing system (computer system) may comprise a single data processor or a plurality of data processors via inter-computer network, each data processor including processing means (processor), storage means (memory), bus means (bus), network means (network), interface means, input means and output means (input and output devices). The computer system may also be simply a server.

The data processor is, for example, a conventional desktop Computer, a multiprocessor computer, or the like. The Processor is, for example, a Central Processing Unit (CPU), a Micro Controller Unit (MCU), Digital Signal Processor (DSP), or the like.

Storage means are in particular provided for storing said specified mass data. Storage means symbolizes any memory means for temporarily or permanently storing data and instructions. Although memory is conveniently illustrated as part of computer, memory function may also be implemented in network, in computers and in processor itself, e.g. cache, register, or elsewhere. Memory can be, for example, a Read Only Memory (ROM), Random Access Memory (RAM), or a memory with other access options. Memory is physically implemented by computer-readable media, for example: (a) magnetic media, such as hard disk, floppy disk or other magnetic disk, tape or cassette tape; (b) optical media, such as optical disk (CD-ROM, DVD); (c) semiconductor media, like DRAM, SRAM, EPROM, EEPROM, or the like.

Memory means may further store support modules, for example, a Basic Input Output System (BIOS), an Operating system (OS), a program library, a compiler or interpreter, and a text processing tool.

Input means symbolizes any device for providing data and instructions for processing by computer, for example, a keyboard or pointing device such as a mouse, trackball or cursor direction key.

Output means symbolizes any device for presenting results of aggregated data packages, for example, a monitor or a display, for example, a Cathode Ray Tube (CRT), Flat Panel Display, Liquid Crystal Display (LCD), or printer.

Bus and network provide logical and physical connections by conveying data and instruction signals. While connections inside computer are conveniently referred to as "bus", connections between computers are referred to as "inter-computer network". Optionally, network comprises gateways being devices (computers) that specialize in data transmission and protocol conversion, allowing users working in one network to access another network.

Networking environments (as network) are commonplace in offices, enterprise-wide computer networks, intranets and the internet (i.e. world wide web). Network can be a wired or wireless network. To name a few network implementations, network is, for example, a local area network (LAN), a wide area network (WAN), a public switched telephone network (PSTN), an Integrated Services Network (ISDN), an infra-red (IR) link, a radio link, like Universal Mobile Tele-communications System (UMTS), Global System for Mobile Communication (GSM), Code Division Multiple Access (CDMA), or satellite link.

Transmission protocols and data formats are known as, for example, transmission control protocol/internet protocol (TCP/IP), hyper text transfer protocol (HTTP), secure HTTP, wireless application protocol, unique resource locator (URL), unique resource identifier (URI), hyper text markup language HTML, extensible markup language XML, extensible hyper text markup language XHTML, wireless application markup language (WML), etc.

Interface means (interfaces) for linking together the data processing units of a data processing system are well known in the art. An interface can be, for example, a serial port interface, a parallel port interface, a universal serial bus (USB) interface, an internal or external modem.

The computer program product comprises a plurality of instructions for causing the processing means of a computer system to execute the method steps of the invention specified hereinafter with more detail. In other words, computer program product defines the operation of computer and its interaction in inter-computer network. For example, computer program product may be available as source code in any programming language, and as object code (binary code) in a compiled form. Persons skilled in the art can use computer program product in connection with any of support modules (e.g. compiler, interpreter, operating system). The computer program product is stored in memory hereinafter referred to as data carrier.

For the communication of computer program product and computer, data carrier is conveniently inserted into input device. Data carrier is implemented as any computer readable medium. Generally, carrier is an article of manufacture comprising a computer readable medium having readable program code means embodied therein for executing the method steps of the present invention. Furthermore, program signal can also embody computer program. Program signal is transmitted via inter-computer network to data processor.

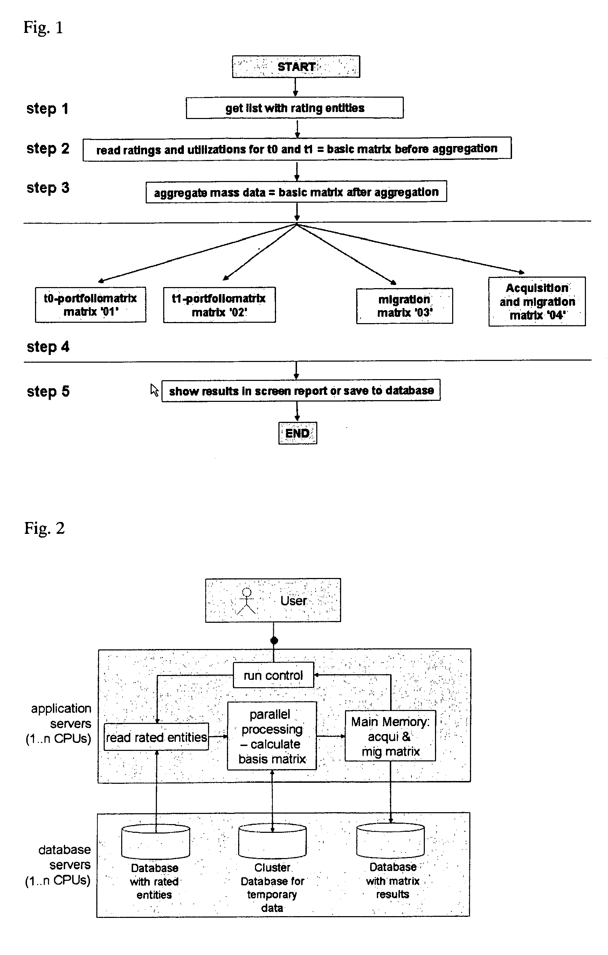

Fig. 1 illustrates a schematic view of a preferred computer-implemented method for determining specified matrices in particular being associated with financial institutions and with financial affairs in banking practice.

In step 1, a list with the rated entities is provided. According to that list, in step 2 ratings and utilizations for T0 and T1 are read from the historical database. A base matrix before aggregation is achieved by reading the mass data as a selection according to the rating entities.

In the next step the mass data is aggregated and a base matrix after aggregation is obtained.

The aggregated base matrix is used to calculate the different result matrices as mentioned in step 4. Exemplified result matrices are TO-portfolio matrix, T1-portfolio matrix, a migration matrix and a combined matrix comprising acquisition and migration data (acquisition and migration matrix).

In more detail usually mass data are used which are stored in a historical database comprising for example millions of records. The mass data ("input data") includes a plurality of M data records, wherein M represents a large amount of data records to be selected and aggregated that can not be handled in the main memory of a data processor. Usually, the mass data ("input data") may further consist of packetized blocks of data provided by different databases of different accessible data sources, including sets of rows and sets of columns, each row corresponding to a record, and the columns including fields of predetermined granularity characteristics and fields of predetermined key figures. Generally speaking, the generic aggregation of characteristics and key figures aims at the reduction of said mass data according to a given customized granularity. Due to the plurality of M data records, said mass data are usually customized as packages including Mₚ < M data records.

Preferably, the computer-implemented method begins with a selection of investigated mass data ("input data") including said plurality of M data records to be aggregated, said mass data being provided by different accessible primary databases of different accessible data sources. Having finished the selection of mass data due to selection criteria, the variously selected blocks of packetized mass data are assigned among each other and the result of assignment is stored to a global database.

Thereupon, some customizing of the selected mass data is usually required for defining granularity characteristics and aggregation operations to be carried out by the processing means of a data processing system for computing fields of key figures.

The granularity characteristics and predetermined key figures include usual data regarding the financial sector, like rating methods, rating classes and rating class dates, identifier for in- and outflows, utilization, e.g. like drawing of a loan (monetary amount), utilization dates, and segment identifier.

If necessary, the selected mass data can be prepared as data packages according to a customer defined package size including Mp < M data records in a pre-processing step before reading said mass data into the processing means of a data processing system.

The packaged data can be additionally enriched in a parallel pre-processing with data from an accessible single secondary database or from accessible secondary databases, subsequently saving the results of enrichment to those local databases of the respective data processors where the data are to be processed.

The selected data records may be stored on a database (base matrix before aggregation) or may be directly aggregated into a base matrix after aggregation. The selection and/or aggregation can be performed as jobs.

A job or a plurality of jobs can be processed in a parallel processing mode, thereby noticeably improving the computing power and run time performance of software, respectively, either using a single data processor or a network of data processors. Depending on the capacity utilization of a data processing system, the processing of aggregation algorithm can optionally run in a linear processing mode, thereby aggregating and merging packages within a job sequentially.

As a result of the selection and aggregation processes an aggregated base matrix is obtained in step 3. The base matrix after aggregation can be stored on a database. The base matrix after aggregation usually contains all the data necessary to calculate migration matrices for a credit risk analysis and reporting according to the Basel II Capital Accord.

The base matrix after aggregation usually contains significant less data than the originally used mass data. Preferably, the base matrix after aggregation contains at most a few thousands data depending on the predetermined granularity characteristics, e.g. the rating method used. In a preferred embodiment of the present invention, the base matrix after aggregation includes 1000 records or less, more preferably 500 records or less. Preferably, the base matrix after aggregation comprises 100 columns or less, preferably 20 columns or less, wherein the columns including fields of predetermined granularity characteristics and fields of predetermined key figures.

Storing the aggregated base matrix permits an examination of the evaluations over a long time, without the need that many different matrices must be stored. On the other hand, a time and computer power consuming recalculation based on the historical database can be avoided. Furthermore, different aggregated base matrices for all the needs of a financial institute can be calculated which are provided to the different users of an financial institute. The different aggregated base matrices may have varying granularity characteristics and / or costumer defined key figures, such like segment identifier, rating method, business partner identifier, rating given by the rating method, rating date, identifier for in- and outflows, utilization (e.g. drawing of a credit loan), currency of the utilization.

Consequently, there is no need that all the different users of an financial institute have access to the historical database. Therefore, the administration of the system, the data integrity and the performance of the system can be improved and the system requirements are low.

The obtained base matrix after aggregation is processed into the specified matrices. Based on the low amount of data, the processing of the base matrix after aggregation can usually be performed in the main memory of a computer. The specified matrices means matrices which are customized by the users and/or prescribed by other institutions or requirements, e.g. Basel II as mentioned above. The specified matrices are also called result matrices and include, e.g., portfolio matrices at specified times, migration matrices, acquisition matrices, matrices concerning in and out flows, matrices concerning changes of volume and/or combinations of two or more of these matrices, like a acquisition and migration matrix.

The calculation of the specified result matrices can also be done in batch modes (background processing) with storage of the results to a database.

The results can be stored in a database or alternatively displayed in a screen reporting as mentioned in step 5 of figure 1.

Finally, the data of the aggregated base matrix and/or the result matrices can be additionally enriched in a post-processing step with data from an accessible secondary database or from accessible secondary databases. Subsequently, the results of the enrichment can be stored in a database.

Figure 2 illustrates at a block diagram the configuration of application servers and database servers. Usually the mass data is stored in a database with rated entities. These rated entities are read by an application server and, preferably in a processing processed in a parallel mode in order to calculate the base matrix. The base matrix may be stored in a database for temporary data. The base matrix is read into the main memory to calculate the result matrices. The results can be stored in an additional database as shown in Figure 2.

The present invention will now be explained more detailed in consideration of a working example.

In a first step all information of the period to be analyzed are brought together. A bank has usually either business partner ratings modules of its own, or it gets external ratings. These ratings are stored in a database for time series of the bank analyzer component called historical database. The time series can be assumed to contain mass data (millions of business partner ratings).

Given is a database with the following fields:
- SID:: Segment Identifier (e.g. 01 = Automotive)
- RM:: Rating method (e.g. INTERNAL = in-house rating model of the bank)
- BUPA:: Business partner identifier
- RAT:: Rating given by the rating method
- RDAT:: Rating date (date with the meaning "rating is valid from ...")
- IO:: Identifier for in- and outflows (e.g. 1 = inflow, 2 = outflow)
- UTIL:: Utilization (e.g. drawing of a credit loan)
- CURR:: Currency of the utilization

In Table 1, some entities of the database are shown. Usually, not all of the business partners are rated with all rating methods. Furthermore, the business partners may obtain more than one rating a year. Therefore, the present working example is very simple. The granularity level of Table 1 comprises the fields SID, RM, BUPA and RDAT.

**Table 1**

| **Segment ID SID** | **Rating Method RM** | **Business Partner BUPA** | **Rating Valid From RDAT** | **Rating RAT** | **Inflow/Outflow IO** | **Utilization UTIL** | **Currency CURR** |
|---|---|---|---|---|---|---|---|
| 1 | INTERNAL | BUPA_01 | 21.04.1999 | A | | 100.000,00 | USD |
| 1 | INTERNAL | BUPA_01 | 26.04.2000 | A | | 80.000,00 | USD |
| 1 | INTERNAL | BUPA_02 | 14.05.1999 | B | | 100.000,00 | USD |
| 1 | INTERNAL | BUPA_02 | 12.08.2000 | C | | 50.000,00 | USD |
| 1 | INTERNAL | BUPA_03 | 01.08.1999 | A | | 50.000,00 | USD |
| 1 | INTERNAL | BUPA_03 | 01.08.2000 | B | 2 | 50.000,00 | USD |
| 1 | INTERNAL | BUPA_04 | 14.02.1999 | C | | 200.000,00 | USD |
| 1 | INTERNAL | BUPA_04 | 18.09.2000 | C | | 150.000,00 | USD |
| 1 | INTERNAL | BUPA_05 | 19.01.2000 | D | 1 | 100.000,00 | USD |
| 1 | INTERNAL | BUPA_06 | 04.11.1999 | B | | 150.000,00 | USD |
| 1 | INTERNAL | BUPA_06 | 23.05.2000 | A | | 200.000,00 | USD |
| 1 | INTERNAL | BUPA_07 | 25.09.1999 | B | | 50.000,000 | USD |
| 1 | INTERNAL | BUPA_07 | 23.12.2000 | B | | 30.000,00 | USD |

### Step 1: List with rating entities

The first step of the calculation is to read the database with the time series of ratings. Usually, only the granularity fields SID (Segment Identifier), RM (Rating method) and BUPA (business partner identifier) are retrieved. In the working example the Table 2 is obtained.

**Table 2**

| **Segment ID SID** | **Rating Method RM** | **Business Partner BUPA** |
|---|---|---|
| 1 | INTERNAL | BUPA_01 |
| 1 | INTERNAL | BUPA_02 |
| 1 | INTERNAL | BURA_03 |
| 1 | INTERNAL | BUPA_04 |
| 1 | INTERNAL | BUPA_05 |
| 1 | INTERNAL | BUPA_06 |
| 1 | INTERNAL | BUPA_07 |

### Step 2: Basic matrix before aggregation

In the step 2, the time series with rating data are preferably transformed into a new list where rating at t0 and rating at t1 are given in one row of the table. The transformation can be done by the following operations:
- RT0:: a rating of the time series (formerly field RAT) which was most recently assigned before t0 is copied to the field RT0
- RT1:: a rating of the time series (formerly field RAT) which was most recently assigned before t1 is copied to the field RT1
- UT0:: a utilization of the time series (formerly field UTIL) which was previously assigned to the rating which is now in field RT0
- UT1:: a utilization of the time series (formerly field UTIL) which was previously assigned to the rating which is now in field RT1
- FX:: the utilizations are converted to the evaluation currency with the evaluation times t0 and t1 (different market data and interest rates); differences in the utilizations of t0 and t1 that are caused by foreign exchange are stored in the new field FX
- CURR:: evaluation currency

The step 2 is preferably done by the software using efficient parallel processing algorithms.

According to the operations as mentioned above, a matrix is obtained as mentioned in Table 3. The granularity level of Table 3 comprises the fields SID, RM, BUPA. In this example all values for FX are 0 because the initial currency and the evaluation currency are identical.

**Table 3**

| **SID** | **RM** | **BUPA** | **RT0** | **RT1** | **UT0** | **UT1** | **FX** | **CURR** | **IO** |
|---|---|---|---|---|---|---|---|---|---|
| 1 | INTERNAL | BUPA_01 | A | A | 100.000,00 | 80.000,00 | 0 | USD | |
| 1 | INTERNAL | BUPA_02 | B | C | 100.000,00 | 50.000,00 | 0 | USD | |
| 1 | INTERNAL | BUPA_03 | A | | 50.000,00 | | 0 | USD | 2 |
| 1 | INTERNAL | BUPA_04 | C | C | 200.000,00 | 150.000.00 | 0 | USD | |
| 1 | INTERNAL | BUPA_05 | | D | | 100.000,00 | 0 | USD | 1 |
| 1 | INTERNAL | BUPA_06 | B | A | 150.000,00 | 200.000,00 | 0 | USD | |
| 1 | INTERNAL | BUPA_07 | B | B | 50.000,00 | 30.000,00 | 0 | USD | |

### Step 3: Basic matrix after aggregation

The matrix obtained in step 2 is aggregated to a so called "basic matrix after aggregation". In contrast to this matrix the other lists described before (like "time series with rating data" and "basic matrix before aggregation") are used only once in the process. The "basic matrix after aggregation" is the starting point for several additional matrices, i.e. it is re-used several times.

In order to aggregate the matrix of step 2, the following operations are performed. The business partners (belonging to the same SID and RM) having the same ratings RT0 and RT1 are counted and the fields UT0 and UT1 are summed up for the business partners having the same ratings RT0 and RT1.

The present working example is very simple. Therefore, the Table 4 is very similar to Table 3. However, if more business partners are used having the same rating combinations a very significant data reduction can be achieved. Please consider that there may be thousands of rating combinations with RTO=B and RT1=B. However, in Table 4 these thousands of data are reduced to one record as mentioned in Table 4. In order to include the numbers of the business partners being aggregated a new field CNT is created comprising the number of ratings for the given granularity. The granularity level of Table 4 comprises the fields SID, RM, RT0, RT1, IO.

**Table 4**

| **SID** | **RM** | **RT0** | **RT1** | **IO** | **CNT** | **UT0** | **UT1** | **FX** | **CURR** |
|---|---|---|---|---|---|---|---|---|---|
| 1 | INTERNAL | A | A | | 1 | 100.000,00 | 80.000,00 | 0 | USD |
| 1 | INTERNAL | B | A | | 1 | 150.000,00 | 200.000,00 | 0 | USD |
| 1 | INTERNAL | B | B | | 1 | 50.000,00 | 30.000,00 | 0 | USD |
| 1 | INTERNAL | B | C | | 1 | 100.000,00 | 50.000,00 | 0 | USD |
| 1 | INTERNAL | C | C | | 1 | 200.000,00 | 150.000,00 | 0 | USD |
| 1 | INTERNAL | | D | 1 | 1 | | 100.000,00 | 0 | USD |
| 1 | INTERNAL | A | | 2 | 1 | 50.000,00 | | 0 | USD |

In the working example the number of ratings is 1 for each granularity, i.e. for each combination of the values SID, RM, RT0, RT1 and IO.

The values in the columns CNT, UT0 and UT1 are sums.

The sequence "time series with rating data" => "basic matrix before aggregation"=> "basic matrix after aggregation" can be done applying efficient parallel processing algorithms.

### Step 4: Calculation of result matrices

In the following steps the "basic matrix after aggregation" is re-used repeatedly.

### TO-portfolio matrix '01'

Key information required is the structure of the portfolio at the beginning of the period.

The structure is given by rating categories.

Key measure is the "key date utilization" (here: monetary amount of a loan UT0 and UT1, respectively).

The portfolio matrix can be calculated by summing up the fields UT0, UT1, CNT and FX for the different ratings at T0 (RT0). Usually a filter (RT0 = "not empty") is applied. Based on Table 4 as mentioned above, the Table 5 is achieved. The granularity level of Table 5 comprises the fields SID, RM, RT0. Granularities RT1 and IO are eliminated.

**Table 5**

| **SID** | **RM** | **DESCRIPTION** | **RT0** | **RT1** | **CNT** | **UT0** | **UT1** | **FX** | **CURR** |
|---|---|---|---|---|---|---|---|---|---|
| 1 | INTERNAL | 01 Portfolio zu t0 | A | | 2 | 80.000,00 | 150.000,00 | 0 | USD |
| 1 | INTERNAL | 01 Portfolio zu t0 | B | | 3 | 280.000,00 | 300.000,00 | 0 | USD |
| 1 | INTERNAL | 01 Portfolio zu t0 | C | | 1 | 150.000,00 | 200.000,00 | 0 | USD |

### T1-portfolio matrix '02'

Same as for the beginning of the period one needs transparent information on the portfolio structure on the end of the period under consideration based on consistent dimensions and measures.

The portfolio matrix can be calculated by summing up the fields UT0, UT1, CNT and FX for the different ratings at T1 (RT1). Usually a filter (RT1 = "not empty") is applied. Based on Table 4 as mentioned above, the Table 6 is achieved. The granularity level of Table 6 comprises the fields SID, RM, RT1. Granularities RT0 and IO are eliminated.

**Table 6**

| **SID** | **RM** | **DESCRIPTION** | **RT0** | **RT1** | **CNT** | **UT0** | **UT1** | **FX** | **CURR** |
|---|---|---|---|---|---|---|---|---|---|
| 1 | INTERNAL | 01 Portfolio zu t0 | | A | 2 | 250.000,00 | 280.000,00 | 0 | USD |
| 1 | INTERNAL | 01 Portfolio zu t0 | | B | 1 | 50.000,00 | 30.000,00 | 0 | USD |
| 1 | INTERNAL | 01 Portfolio zu t0 | | C | 2 | 300.000,00 | 200.000,00 | 0 | USD |
| 1 | INTERNAL | 01 Portfolio zu t0 | | D | 1 | 0 | 100.000,00 | 0 | USD |

### Migration matrix '03'

A further important information is the migration matrix. The migration matrix comprises information about a change of ratings and concerns the question: Given a specific rating at the beginning of the period, in which rating categories do the customers show up at the end of the period? The key figures CNT and UT0 (UT1) can further on be used to calculate rating transitions (weighted or unweighted frequencies or probabilities).

On changed ratings of an existing customers one may look from two directions. The first matrix concerns the question: Given a specific rating at the beginning of the period, in which rating category does a customer show up at the end of the period.

The migration matrix can be calculated by summing up the fields UT0, UT1, CNT and FX for the different rating transitions RT0 → RT1 on the specified granularity. Usually a filter (RT0 = "not empty" and RT1 = "not empty") is applied. Based on Table 4 as mentioned above, the Table 7 is achieved. The granularity level of Table 7 comprises the fields SID, RM, RT0, RT1.

**Table 7**

| **SID** | **RM** | **DESCRIPTION** | **RT0** | **RT1** | **CNT** | **UT0** | **UT1** | **FX** | **CURR** |
|---|---|---|---|---|---|---|---|---|---|
| 1 | INTERNAL | 11 Migrationsmatrix | A | A | 1 | 100.000,00 | 80.000,00 | 0 | USD |
| 1 | INTERNAL | 11 Migrationsmatrix | B | A | 1 | 150.000,00 | 200.000,00 | 0 | USD |
| 1 | INTERNAL | 11 Migrationsmatrix | B | B | 1 | 50.000,00 | 30.000,00 | 0 | USD |
| 1 | INTERNAL | 11 Migrationsmatrix | B | C | 1 | 100.000,00 | 50.000,00 | 0 | USD |
| 1 | INTERNAL | 11 Migrationsmatrix | C | C | 1 | 200.000,00 | 150.000,00 | 0 | USD |

### Acquisition and migration matrix '04'

The acquisition and migration matrix is assembled by the single matrices described before. Furthermore, the m acquisition and migration matrix can contain further data based on the base matrix as mentioned above, e.g. data of in and out flows of customers, customer acquisitions, changes in volume, acquisition performance and the portfolio after migrations.

The data of in and out flows of customers are calculated by applying a appropriate filter based on the base matrix as mentioned above. The customer acquisition arises from the total of customer wins and customer losses.

The calculation of the portfolio after migration to t1 is also based on the already determined data, the portfolio at t0 as well as the migration matrix. The concrete calculation step is:
Volume of the portfolio after migration to t1= portfolio at t0+ inflows and outflows for each rating class with volumes of t1+ outflows for each rating class with volumes of t1.

The changed volume manifests itself as volume of the portfolio at t1 minus volume of theportfolio after migration to t1 minus customer acquisition". The acquisition performance manifests itself as the total of customer acquisition and changed volume.

In the present working example, the Table 8 is achieved.

**Table 8**

| **SID** | **RM** | **KEY** | **DESCRIPTION** | **RTNG** | **RT0** | **RT1** | **CNT** | **UTLZ** | **UT0** | **UT1** | **FX** | **CURR** |
|---|---|---|---|---|---|---|---|---|---|---|---|---|
| 1 | INTERNAL | 1 | 01 portfolio at t0 | | A | | 2 | | 150000 | 80000 | 0 | USD |
| 1 | INTERNAL | 1 | 01 portfolio at t0 | | B | | 3 | | 300000 | 280000 | 0 | USD |
| 1 | INTERNAL | 1 | 01 portfolio at t0 | | C | | | | 200000 | 150000 | 0 | USD |
| 1 | INTERNAL | 2 | 02 portfolio at t1 | | | A | 2 | | 250000 | 280000 | 0 | USD |
| 1 | INTERNAL | 2 | 02 portfolio at t1 | | | B | 1 | | 50000 | 30000 | 0 | USD |
| 1 | INTERNAL | 2 | 02 portfolio at t1 | | | C | 2 | | 300000 | 200000 | 0 | USD |
| 1 | INTERNAL | 2 | 02 portfolio at t1 | | | D | 1 | | 0 | 100000 | 0 | USD |
| 1 | INTERNAL | 3 | 03 in-migrations from ... to ... | | B | A | 1 | | 150000 | 200000 | 0 | USD |
| 1 | INTERNAL | 3 | 03 in-migrations from ... to ... | | B | C | 1 | | 100000 | 50000 | 0 | USD |
| 1 | INTERNAL | 4 | 04 out-migrations to ... from ... | | A | B | 1 | | 150.000- | 200.000- | 0 | USD |
| 1 | INTERNAL | 4 | 04 out-migrations to ... from ... | | C | B | 1 | | 100.000- | 50.000- | 0 | USD |
| 1 | INTERNAL | 5 | 05 customers lost (after t0) | | A | | 1 | | 50.000- | | 0 | USD |
| 1 | INTERNAL | 6 | 06 customers won (at t1) | | | D | 1 | | | 100000 | 0 | USD |
| 1 | INTERNAL | 7 | 07 customer acquisitions | A | | | 1 | 50.000- | | | 0 | USD |
| 1 | INTERNAL | 7 | 07 customer acquisitions | D | | | 1 | 100000 | | | 0 | USD |
| 1 | INTERNAL | 8 | 08 changed volume | A | | | | 20.000- | | | 0 | USD |
| 1 | INTERNAL | 8 | 08 changed volume | B | | | | 20.000- | | | 0 | USD |
| 1 | INTERNAL | 8 | 08 changed volume | C | | | | 50.000- | | | 0 | USD |
| 1 | INTERNAL | 8 | 08 changed volume | D | | | | 100.000- | | | 0 | USD |
| 1 | INTERNAL | 9 | 09 acquisition performance | A | | | | 70.000- | | | 0 | USD |
| 1 | INTERNAL | 9 | 09 acquisition performance | B | | | | 20.000- | | | 0 | USD |
| 1 | INTERNAL | 9 | 09 acquisition performance | C | | | | 50.000- | | | 0 | USD |
| 1 | INTERNAL | 9 | 09 acquisition performance | D | | | | 100000 | | | 0 | USD |
| 1 | INTERNAL | 10 | 10 portfolio after migrations at t1 | A | | | 3 | 350000 | | | 0 | USD |
| 1 | INTERNAL | 10 | 10 portfolio after migrations at t1 | B | | | 1 | 50000 | | | 0 | USD |
| 1 | INTERNAL | 10 | 10 portfolio after migrations at t1 | C | | | 2 | 250000 | | | 0 | USD |

Bringing all the different aspects together does now allow to make the actions and events transparent which lead to the changed risk profile within the period under consideration. Based on this information risk management has now a much better decision support to adequately react, e.g.:
Adjust the customer acquisition strategy
Focus on customer retention
React on unfavourable rating migration effects

As all these actions will be taken by different parties within the financial institutions, the consistent information basis provided above will ensure that consistent actions can be initiated.

It will be apparent to those skilled in the art that various modifications and variations can be made in the system and the method of the present invention without departing from the spirit and scope of the invention. Thus, it is intended that the present invention covers the modifications and variations of this invention provided that they come within the scope of the appended claims and their equivalents.

## Claims

1. A computer-implemented method for determining specified matrices, particularly associated with financial institutions and with financial affairs in banking practice, the method comprising the following steps:
receiving mass data from a single database of a single data source or from different databases of different data sources associated with banking practice, said mass data including sets of rows and sets of columns, each row corresponding to a record, and the columns including fields of predetermined granularity characteristics and fields of predetermined key figures;
selecting predetermined granularity characteristics and predetermined key figures, and selecting predetermined aggregation operations to be carried out by the processing means of a data processing system;
reading input data from a single database of a single data source or from different databases of different data sources into the processing means of a data processing system;
processing the data packages in a process by identifying said customized granularity characteristics and key figures; and subsequently aggregating the records in each data package for key figures by using aggregation operations;
forming at least one base matrix comprising the aggregated records of said customized granularity characteristics and key figures by saving the results of each data package; and
using said base matrix to calculate said specified matrices.

2. The method of claim 1, wherein the aggregation is computed for said predetermined granularity characteristics and / or predetermined key figures using predetermined aggregation operations selected from a function pool and / or costumer defined aggregation operations to be defined by input means using said predetermined aggregation operations.

3. The method of claim 1, wherein the aggregation is computed for costumer defined granularity characteristics and / or costumer defined key figures that are to be defined by input means using said predetermined aggregation operations selected from a function pool and using said predetermined aggregation operations and / or said costumer defined aggregation operations.

4. The computer-implemented method of one of claims 1 to 3, wherein the key figures and/or the granularity characteristics includes rating methods, rating classes and rating class dates.

5. The computer-implemented method of one of claims 1 to 4, wherein the granularity characteristics includes identifier for in- and outflows.

6. The computer-implemented method of one of claims 1 to 5, wherein the key figures and/or the granularity characteristics includes utilization and utilization dates.

7. The computer-implemented method of claim 6, wherein the utilization is the monetary amount of a loan.

8. The computer-implemented method of claim 6 or 7, wherein the aggregation of the utilization is performed by summarization.

9. The computer-implemented method of one of claims 1 to 8, wherein the granularity characteristics includes segment identifier.

10. The computer-implemented method of one of claims 1 to 9, wherein the specified matrices include portfolio matrices at specified times, migration matrices, acquisition matrices, matrices concerning in and out flows, matrices concerning changes of volume and/or combinations of two or more of these matrices.

11. The computer-implemented method of one of claims 1 to 10, wherein the mass data are processed in a parallel processing mode using a single data processor.

12. The computer-implemented method of one of claims 1 to 11, wherein the mass data are processed in a parallel processing mode using a network of data processors.

13. The computer-implemented method of claim 12, wherein the network of data processors is a Local Area Network (LAN), Wide Area Network (WAN), intranet or internet.

14. The computer-implemented method of claim 1, wherein said data packages are processed within jobs, and wherein the jobs are processed in a parallel processing mode using a single data processor, thereby aggregating and merging the data packages of a job sequentially.

15. The computer-implemented method of claim 1, wherein said data packages are processed within jobs, and wherein the jobs are processed in a parallel processing mode using a network of data processors, thereby aggregating and merging the data packages of a job sequentially.

16. The computer-implemented method of one of claims 1 to 15, wherein an additional calculation step for enriching the aggregated or the source data packages is performed.

17. A computer system configured to perform determining specified matrices, particularly associated with financial institutions and with financial affairs in banking practice, the system comprising:
storage means for providing mass data associated with banking practice, said mass data including sets of rows and sets of columns, each row corresponding to a record, and the columns including fields of predetermined granularity characteristics and fields of predetermined key figures;
input means for selecting predetermined granularity characteristics and predetermined key figures, and selecting predetermined aggregation operations to be carried out by the processing means of a data processing system;
processing means for reading input data from a single database of a single data source or from different databases of different data; and processing the data packages in a process by identifying said customized granularity characteristics and key figures; and subsequently aggregating the records in each data package for key figures by using aggregation operations; forming at least one base matrix comprising the aggregated records of said customized granularity characteristics and key figures by saving the results of each data package; and using said base matrix to calculate said specified matrices.

18. A computer system of claim 17, comprising an output means for presenting the specified matrices and/or a storage means for saving the result matrices.

19. A computer system of claims 17 or 18, comprising a storage means for saving said base matrix after aggregation.

20. A computer system of one of claims 17 to 19 comprising a networking means for providing said base matrix after aggregation or said result matrices to users having no access to the mass data.

21. A computer program product having a plurality of instructions for causing processing means of a computer system to execute the following steps:
receiving mass data from a single database of a single data source or from different databases of different data sources associated with banking practice, said mass data including sets of rows and sets of columns, each row corresponding to a record, and the columns including fields of predetermined granularity characteristics and fields of predetermined key figures;
selecting predetermined granularity characteristics and predetermined key figures, and selecting predetermined aggregation operations to be carried out by the processing means of a data processing system;
reading input data from a single database of a single data source or from different databases of different data sources into the processing means of a data processing system;
processing the data packages in a process by identifying said customized granularity characteristics and key figures; and subsequently aggregating the records in each data package for key figures by using aggregation operations;
forming at least one base matrix comprising the aggregated records of said customized granularity characteristics and key figures by saving the results of each data package; and
using said base matrix to calculate said specified matrices.

22. A data carrier readable by a computer, the data carrier storing a plurality of instructions implemented by computer program for causing the processing means of a computer system to execute the method of claim 1.
